# EUROPEAN PATENT SPECIFICATION

(11) **EP 4 097 057 B1**
(45) Date of publication and mention of the grant of the patent: **24.04.2024**
(21) Application number: 21702961.0
(22) Date of filing: 29.01.2021
(51) Int. Cl.: C03B 3/00, C03B 5/027, C03B 5/167, C03C 1/00, C03C 13/06

(54) **METHOD FOR MAKING MAN-MADE VITREOUS FIBRES**
VERFAHREN ZUR HERSTELLUNG VON KÜNSTLICHEN GLASFASERN
PROCÉDÉ DE FABRICATION DE FIBRES VITREUSES MANUFACTURÉES

(30) Priority: 30.01.2020 EP 20154746
(43) Date of publication of application: 07.12.2022
(73) Proprietor: ROCKWOOL A/S, 2640 Hedehusene (DK)
(72) Inventor: HANSEN, Lars Elmekilde, 2640 Hedehusene (DK); LARSEN, Ejvind Voldby, 2640 Hedehusene (DK)
(74) Representative: Gill Jennings & Every LLP
(86) International application number: PCT/EP2021/052195
(87) International publication number: WO 2021/152140

(56) References cited:
- WO-A1-99/28252
- US-A- 4 697 274

## Description

### FIELD OF INVENTION

The invention relates to a process for making man-made vitreous fibres (MMVF) using an electric furnace to melt mineral charge.

### BACKGROUND

The invention concerns methods of making MMVF and consolidated MMVF products such as insulation products. Generally, mineral raw material (mineral charge) with the desired overall chemical composition is melted in a furnace, the mineral melt is removed and fed to a fiberizing apparatus such as an external or internal centrifugation apparatus, and the fibres are collected, further processed if necessary and formed into batts, usually with a binder.

WO9928252 A1 teaches a process for making mineral fibers containing 5-12 wt% FeO (corresponding to 5.6-13.3 wt% Fe2O3), by melting raw material in a furnace, whereby the raw material comprises metallic aluminium. US4697274 A discloses corresponding features to the ones of WO9928252 A1, whereby the furnace is heated electrically using electrodes.

For a number of reasons it is preferable to use electric furnaces instead of coal, oil or gas-fired furnaces. Electric furnaces have the potential to be powered by renewable energy and so the environmental profile of electric furnaces can be better than combustion furnaces. It can also be beneficial if renewable electricity is used as it is less expensive, at least partly due to lower carbon tax. Use of electric and/or gas-fired furnace also eliminates the need for sulphur dioxide cleaning, as compared to a coal-fired or oil-fired furnace.

However, in the context of an electric furnace using molybdenum electrodes, the resulting MMVF products may show excessive shrinkage from sintering when subjected to high temperature. Shrinkage leads to formation of thermal bridges which may be crucial if the products are used for fire protection. In general, low-density products show greater shrinkage than high-density products.

Standard electrical furnaces for MMVF production make use of molybdenum or carbon electrodes. These electrodes supply the necessary energy to melt mineral material by the Joule effect. Typically, molybdenum electrodes with purity >99% Mo are inert to molten mineral material and consequently do not participate in the reduction of Fe₂O₃ to FeO oxide in the melt bath. In a consolidated MMVF product, FeO is an important component in limiting shrinkage of fibres, providing fire resistance as well as high temperature stability.

It would be desirable to provide a method whereby a melt can be made that is then suitable for processing into MMVF, using an electric furnace with molybdenum electrodes to provide the melt, without a possibility of excessive shrinkage in the product.

The resulting consolidated MMVF products are required to have shrinkage from sintering in an acceptable range in high-temperature or fire conditions. Shrinkage should be avoided or at least reduced where possible, because thermal bridges and insulation gaps can form when a consolidated MMVF product shrinks in a high-temperature scenario.

It would be desirable to further reduce the degree of shrinkage of consolidated MMVF products.

### SUMMARY

The inventors solved the problem of reducing shrinkage of consolidated MMVF products with the method of claim 1.

Molybdenum electrodes, unlike the main alternate electrode type for mineral melting furnaces (i.e. graphite electrodes) do not generate reducing conditions in the mineral melt. This results in a lower ratio of Fe(ll) to Fe(lll) than is desirable for fire-rated MMVF products, because reducing conditions are required in order to increase this ratio. It is desirable to increase the ratio of Fe(ll) to Fe(lll) in order to improve the high temperature stability of MMVF products and improve their fire resistance. In particular, a higher ratio will minimise or even prevent shrinkage of MMVF in a fire or other high temperature scenario.

The process of claim 1 solves this problem by introducing metallic aluminium into the furnace, either combined with the other mineral materials or separately added, thereby creating the reducing conditions necessary to achieve the desired ratio of Fe(ll) to Fe(III). This is because a redox reaction occurs whereby metallic aluminium oxidises to form Al₂O₃ and Fe₂O₃ reduces to form FeO in the method of the invention. Therefore the ratio of FeO: Fe₂O₃ can be controlled.

The material that comprises metallic aluminium may comprise from 0.5 to 10 wt% metallic aluminium, preferably from 1-5 wt% metallic aluminium.

The material that comprises metallic aluminium further may comprise from 50 to 90 wt% aluminium oxide in addition to the metallic aluminium. Aluminium oxide is an important component of MMVF and so its inclusion alongside metallic aluminium is beneficial.

The material that comprises metallic aluminium may be particulate, with 90 wt% of particles smaller than 1 mm. This may facilitate uniform pre-mixing of the source of metallic aluminium with the other mineral component, thereby enabling the mineral melt to have a consistent composition. Preferably this material is alu-dross.

Alu-dross is a particulate waste material from the aluminium processing industry and comprises primarily (usually 50 to 90 wt%) Al₂O₃, with around 0.5 to 10 wt% metallic aluminium. Alu-dross may make up from 5 to 30 wt% of the total mineral charge, such as approximately 10 wt%.

The alu-dross comprise from 0.5 to 10 wt% metallic aluminium, from 50 to 90 wt% alumina Al₂O₃ and from 0 to 49.5 wt% other materials. Preferably the alu-dross comprises from 2 to 6 wt% metallic aluminium. The other materials may include one or more of SiO₂, MgO and Fe₂O₃. Preferably the alu-dross comprises oxides of corundum, spinel and mullite.

The alu-dross may have a controlled particle size distribution. For example, the alu-dross may have particle size distribution such that 90% by weight of particles are below 1 mm, preferably 90% by weight below 200 µm. The average particle size of the alu-dross may be from 10 to 100 µm, such as 20 to 30 µm.

Contents of metallic aluminium and alumina (and other components) are on a dry basis and can be determined using standard methods. For instance, content of metallic aluminium can be determined by reacting the material with a strong base, such as NaOH. The amount of metallic aluminium can be determined from the amount of hydrogen gas released.

Alu-dross may preferably be sourced from waste products from secondary production of aluminium. In particular, the aluminium casting process provides a specific alumina-rich waste material described commonly as "alu-dross". This tends to contain significant proportions of metallic aluminium and is thus treated in order to retrieve the metallic aluminium. The alu-dross is generally crushed, milled and sieved. This produces some aluminium for re-sale and an aluminium-rich fraction which is sent to a furnace for re-use. As a by-product an alumina-rich powder is also produced. This powder can usefully be used as a source of metallic aluminium in the method of the invention. This alumina-rich powder generated from treatment of alu-dross (crushed alu-dross) may contain levels of halogen materials (by weight) of for instance 1 to 10%, preferably 1 to 8%. Halogens include in particular fluoride and chloride.

The aluminium-rich fraction, optionally together with other aluminium-containing waste materials, is subjected to re-melting in a furnace. This may be a rotating furnace or kiln. The aluminium waste may be subjected to plasma heating. A conventional furnace may be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, which may also be used as a source of metallic aluminium in the invention. This product tends to have lower content of halogen materials (e.g. fluoride) than the alumina-rich powder produced by treatment of alu-dross (crushed alu-dross). Its content of halogen (by weight) tends to be from 0 to 5%, often at least 0.5 or 1%, and is preferably not more than 3%.

Alu-dross is a particulate waste material from the aluminium processing industry and comprises primarily (usually 50 to 90 wt%) Al₂O₃, with around 0.5 to 10 wt% metallic aluminium. Alu-dross may make up from 5 to 30 wt% of the total mineral charge, such as approximately 10 wt%. Using amounts in this range reduces the need to use virgin raw materials for the aluminium oxide component of the MMVF composition whilst maintaining the desired effect of minimising shrinkage of consolidated MMVF products.

In some embodiments, the material that comprises metallic aluminium comprises from 45 to 100 wt% metallic aluminium, preferably at least 85 wt% metallic aluminium. This higher-percentage of metallic aluminium means that this material may form a lower percentage of the total mineral raw material. For example, the mineral raw material may comprise from 0.05 to 10 wt%, measured as metallic aluminium, of the material that comprises from 45 to 100 wt% metallic aluminium.The material that comprises from 45 to 99 wt% metallic aluminium may be in any suitable physical form. Suitable materials include aluminium granulate and one or more blocks of metallic aluminium.

The amount of Al granulate required as a proportion of the total mineral charge is much lower than the amount of alu-dross required for the same amount of metallic aluminium, at approximately 0.2 wt% of the total mineral charge, such as 0.1 to 0.5 wt% of the total mineral charge, such as 0.2 to 0.4 wt% of the total mineral charge, measured as metallic aluminium.

Blocks may take any suitable form, for example rods, bars, lumps, or another shape. Blocks may comprises from 45 to 99 wt% metallic aluminium and are preferably essentially entirely metallic aluminium. When one or more blocks are used as the source of metallic aluminium, preferably the blocks are rod shaped.

A rod or other block shape of metallic aluminium may be inserted directly into the mineral melt in the furnace. This method avoids premature oxidation of the metallic aluminium, thereby improving the efficiency of the process.

To avoid premature oxidation of its metallic Al component, Al granulate may be added directly into the melt pool. For example it may be added by means of a burner or lance, such as an oxyfuel burner having a central pipe for transport of the Al granulate.

Al granulate can be added alone, as a raw material component that comprises only Al granulate. Alternatively it can be pre-mixed with filler and the blend of Al granulate and filler added to the furnace as a blended raw material component. Suitable fillers include various raw materials that could be the additional raw materials used. For example, Al granulate may be mixed with filter fines (i.e. fine particulate raw material extracted from the exhaust filter of the process) prior to injection into the cyclone furnace. Suitable percentages of Al granulate in the blend with filler are 1 to 90%, such as 10 to 70%, such as 15 to 50%. Using a blend of Al granulate and other raw materials can improve dosing control of metallic aluminium in the process.

Al granulate mixes well with the melt due to similar densities of the melt and metallic aluminium.

In addition, Al granulate is a much purer material than alu-dross.

The particle size (mean particle diameter, wherein particle diameter is taken to mean the largest dimension of a particle regardless of whether or not the particle is spherical) of the Al granulate may be no greater than 15 mm, such as less than 10 mm, such as less than 5 mm. In a preferred embodiment, the particle size (mean particle diameter, wherein particle diameter is taken to mean the largest dimension of a particle regardless of whether or not the particle is spherical) of the granulated Al may be no greater than 3 mm, such as less than 2 mm, such as less than 1 mm.

In the invention, the mineral raw material may comprise from 0.1 to 0.5 wt% metallic aluminium.

In preferred embodiments the MMVF have the following levels of elements, calculated as oxides in wt%:
SiO₂: at least 30, 32, 35 or 37; not more than 51, 48, 45 or 43
CaO: at least 8 or 10; not more than 30, 25 or 20
MgO: at least 2 or 5; not more than 25, 20 or 15
FeO (including Fe₂O₃): at least 4 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

The fibres preferably have sintering temperature above 800 °C, more preferably above 1000 °C.

The MMVF made by the method of the invention preferably have the composition in wt%:

| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3 |

Another preferred composition for the MMVF is as follows in wt%:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na₂O + K₂O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%.

This composition may suitably be used with an internal centrifugation apparatus as the fiberizing apparatus.

A preferred range of SiO₂ is 39-44%, particularly 40-43%. A preferred range for CaO is 9,5-20%, particularly 10-18%.

Al₂O₃-content is preferably between 16 and 27%, preferably greater than 17% and/or preferably less than 25%, and the sum of SiO₂ and Al₂O₃ is preferably between 57 and 75%, preferably greater than 60% and/or preferably less than 72%. The quantity of alkali metal (sodium and potassium) oxides (R₂O) in this fibre composition is preferably relatively high but limited to between 10-14,7%, preferably 10 and 13,5%, with magnesia in an amount of at least 1%.

Preferably, Al₂O₃ is present in an amount of 17-25%, particularly 20-25%, in particular 21-24,5% and especially around 22-23 or 24% by weight. Advantageously, the magnesia content is at least 1,5%, in particular 2% and preferably 2-5% and particularly preferably >2,5% or 3%.

In the case that Al₂O₃ is present in an amount of at least 22% by weight, the amount of magnesia is preferably at least 1%, advantageously around 1-4%, preferably 1-2% and in particular 1,2-1,6%. The content of Al₂O₃ is preferably limited to 25% in order to preserve a sufficiently low liquidus temperature. When the content of Al₂O₃ is present in a lower amount of for example around 17-22%, the amount of magnesia is preferably at least 2%, especially around 2-5%.

The total amounts of the oxides of Fe and Mg are important for controlling the shrinkage of MMVF insulation. Furthermore the ratio of Fe(II):Fe(III) impacts the performance of MMVF insulation in a fire situation, where oxidation of Fe(ll) to Fe(lll) is a beneficial process.

Advantageously the fibres have a ratio of Fe(II):Fe(III) of above 2, such as above 3. The proportion of Fe(3+), based on total Fe in the melt, prior to the fiberisation step, and in the MMVF is generally less than 5%, preferably less than 3%. This aids in shrinkage prevention.

The amount of Fe(2+) and Fe(3+) can be determined using the Mössbauer method described in "The ferric/ferrous ratio in basalt melts at different oxygen pressures", Helgason et al, Hyperfine Interact., 45 (1989) pp 287-294.

The amount of total iron in the overall melt or fibre composition, based on total oxides in the melt or fibres, is calculated as Fe₂O₃. This is a standard means of quoting the amount of iron present in such an MMVF, a charge or a melt. The actual weight percentage of FeO and Fe₂O₃ present will vary based on the iron oxide ratio and/or redox state of the melt. As an example:

**Table 1**

| **Fe(3+)** | **Fe(2+)^{/}Fe(3+) = 80/20** | | **Fe(2+)/Fe(3+) = 97/3** | |
|---|---|---|---|---|
| **Fe₂O₃** | **FeO** | **Fe₂O₃** | **FeO** | **Fe₂O₃** |
| w/w% | w/w% | w/w% | w/w% | w/w% |
| Fe₂O₃ | FeO | Fe₂O₃ | FeO | Fe₂O₃ |
| 3 | 2.2 | 0.6 | 2.6 | 0.09 |
| 4 | 2.9 | 0.8 | 3.5 | 0.12 |
| 5 | 3.6 | 1.0 | 4.4 | 0.15 |
| 6 | 4.3 | 1.6 | 5.2 | 0.18 |
| 7 | 5.0 | 1.4 | 6.1 | 0.21 |
| 8 | 5.8 | 1.6 | 7.0 | 0.24 |

The skilled person will therefore understand that the actual weight percentage of the iron oxides present will be dependent on the ratio of Fe(2+) to Fe(3+).

The process of the invention may further comprise consolidating the MMVF to form a consolidated product comprising the MMVF. Consolidated products can be used in many applications, including fire-rated insulation products. In such applications, the reduction of shrinkage is particularly beneficial as it reduces the risk of formation of thermal bridges or insulation gaps in a critical situation.

Suitable furnaces for use in the method of the invention include electric glass-melting furnaces known to the person skilled in the art, which use Joule heating with molybdenum electrodes to melt mineral raw material. Optionally the Joule heating may be supplemented with combustion of gaseous fuel.

The invention may also be implemented in a tank furnace in which mineral raw material is melted by heat from combustion of gaseous fuel supplemented by molybdenum electrode Joule heating. These types of furnace are known to the person skilled in the art.

The raw materials used as the remainder of the mineral charge can be selected from a variety of sources, as is known. These include basalt, diabase, nepheline syenite, glass cullet, bauxite, quartz sand, limestone, rasorite, sodium tetraborate, dolomite, soda, olivine sand, potash. Waste materials may also be used.

The MMV fibres may be made from the mineral melt in conventional manner. Generally they are made by a centrifugal fibre-forming process.

For instance the fibres may be formed by a spinning cup process in which they are thrown outwardly through perforations in a spinning cup. The melt is fiberised by the spinning cup technology (also sometimes described as internal centrifugation). The melt preferably has a temperature at the end of the feeder channel in the range 1260 °C -1300 °C before it is led to the spinning cup. The melt preferably cools down when it is transferred from the feeder channel to the internal part of the spinning cup in such a way that the temperature for the melt when flowing through the perforations of the spinning cup is in the range 1150 °C - 1220 °C.

The viscosity of the melt in the spinning cup is in the range of 50 to 400 Pa.s, preferably 100 to 320 Pa s, more preferably 150 - 270 Pa.s. If the viscosity is too low, fibres of the desired thickness are not formed. If the viscosity is too high, the melt does not flow through the apertures in the spinning cup at the right pull rate, which can lead to blocking of the apertures in the spinning cup.

The melt is preferably fiberised by the spinning cup method at a temperature between 1160 and 1210 °C. The viscosity of the melt is preferably in the range 100-320 Pa.s at the spinning temperature.

In an alternative fibre-forming method, melt may be thrown off a rotating disc and fibre formation may be promoted by blasting jets of gas through the melt.

In a preferred method fibre formation is conducted by pouring the melt onto the first rotor in a cascade spinner. Preferably in this case the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMVF may be collected and consolidated to form a consolidated product comprising the MMVF. Typically such product may comprise additional ingredients such as binder, with MMVF being the major component. The fibres resulting from the spinning process are preferably collected on a conveyor belt. Binder can be applied to the MMVF either during the fiberisation process, or post fiberisation. The binder may be applied by spraying the MMVF. Conventional types of binder for use with stone wool fibres may be used. The binder is then cured to produce a final product. The MMVF with binder is generally cured in a curing oven, usually by means of a hot air stream. The hot air stream may be introduced into the MMVF with binder from below, or above or from alternating directions in distinctive zones in the length direction of the curing oven. After curing, the cured binder composition binds the fibres to form a structurally coherent matrix of fibres.

The MMVF may be consolidated after collection, for instance by cross-lapping and/or longitudinal compression and/or vertical compression, in known manner. Usually consolidation occurs prior to curing of binder.

The MMVF produced by the method of the present invention, and the MMVF of the invention, have excellent fire resistance at 1000 °C. The MMVF can be made into a product for use in any of the conventional applications for MMVF, such as sound or heat insulation or fire protection. Such products include insulation products such as batts, granulate, boards, rolls, pipe sections, and other products such as tiles and loose fibres. The product may be used in high temperature environments, such as at least 400°C up to 1000°C.

The product may have any of the densities known in the art for the relevant application. For instance it may be in the range 20 to 1200 kg/m³, preferably 20 to 300 kg/m³, more preferably 20 to 150 kg/m³. Shrinkage leads to formation of thermal bridges which may be crucial if the products are used for fire protection. Shrinkage benefits are seen for all product types, but it is observed that especially good shrinkage reduction is seen when the density of the product is relatively low, for instance not more than 50 kg/m³.

### BRIEF DESCRIPTION OF DRAWINGS

Figure 1 shows a typical electric furnace which may be used in the process of the present invention.
Figure 2 shows an arrangement of electrodes in a cross-section of Figure 1.

### DETAILED DESCRIPTION

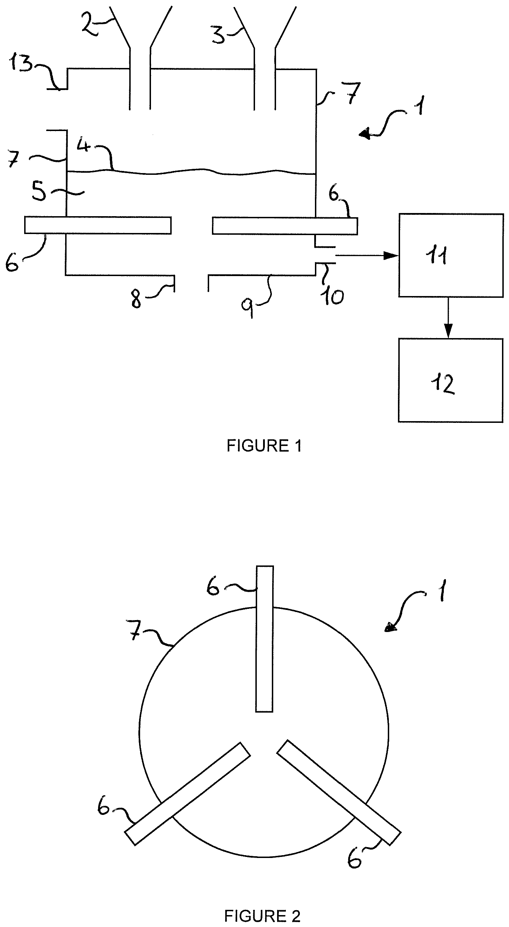

Exemplary methods in accordance with the invention will now be described with reference to Figure 1 and 2.

An electric furnace 1 is illustrated schematically in figure 1 and 2. Mineral raw material is introduced to the furnace 1 via one or more inlets 2, 3 and forms a layer 4 on top of a melt pool 5. The mineral raw material is melted by Joule heating, facilitated by molybdenum electrodes 6. The electrodes 6 are illustrated in Figure 1 and 2 as protruding from the sidewalls 7 of the furnace 1. The electrodes may be emerging from the top in other configurations provided that the electrodes are protected from the air. Alternatively, the electrodes may emerge from the bottom of the furnace. Various options for basic setup of an electric glass-melting tank furnace are generally known in the art.

Material that comprises metallic aluminium may be pre-mixed with the other mineral component and introduced to the furnace 1 as a uniform mineral charge via one or more inlets 2, 3. This option might be preferable when alu-dross is used as the material that comprises metallic aluminium.

Alternatively, the material that comprises metallic aluminium may be introduced to the furnace 1 separately from the remaining mineral material. For example, the material that comprises metallic aluminium may be introduced to the furnace 1 via inlet 2 and the other mineral material may be introduced to the furnace 1 via separate inlet 3. This option might be preferable when aluminium granulate or blocks are used as the material that comprises metallic aluminium.

Optional outlet 8 formed in the base 9 of the furnace 1 may be used to tap metallic iron, if it is formed. Preferably metallic iron is not formed in the process and so outlet 8 may not be needed.

Mineral melt from the melt pool 5 exits the furnace 1 via melt outlet 10. Melt outlet 10 is illustrated as being formed in the sidewall 7 of the furnace 1 but may equally be formed in the base 9.

On exiting the furnace 1, mineral melt may optionally be subject to fining processes. Alternatively, the mineral melt may be transported directly to a fiberizing apparatus 11 to form man-made vitreous fibres (MMVF). Either internal centrifugation or external centrifugation may be used and so the details of fiberizing apparatus 11 are not shown. Suitable fiberizing apparatuses are known to those skilled in the art.

MMVF formed at apparatus 11 may be collected and stored, or they may be directly processed into a consolidated product at processing line 12 (details not illustrated).

Flue gas exit 13 is shown provided in the top of the sidewall 7 of furnace 1. However, it may also be provided in the top of the furnace, in setups known to those skilled in the art.

### alu-dross

### TEST METHOD

The area shrinkage of a consolidated MMVF product may be measured according to the following test method:
1) cutting, measuring and weighing test specimens from product test unit;
2) selecting representative test specimens from test unit;
3) removing binder at 590 °C;
4) sintering test specimens at 1000 °C +/- 20 °C for 30 minutes; and
5) Measure area of sintered test specimen.

The shrinkage is measured as a % reduction in surface area of each product. The major face of each product that is measured for shrinkage is equivalent to the major face that would be apparent in a finished product. For example, the reduction in length and width of a slab, but not its thickness, is measured.

## Claims

1. A process for making man-made vitreous fibres (MMVF) which comprise at least 3 wt% iron oxides determined as Fe₂O₃, comprising
providing an electric furnace having molybdenum electrodes,
providing mineral raw material,
wherein the mineral raw material comprises (a) material that comprises metallic aluminium and (b) other mineral component,
introducing the mineral raw material into the furnace,
melting the mineral raw material to form a mineral melt, and
forming MMVF from the mineral melt.

2. The process according to any preceding claim, wherein the material that comprises metallic aluminium comprises from 0.5 to 10 wt% metallic aluminium.

3. The process according to any preceding claim, wherein the material that comprises metallic aluminium further comprises from 50 to 90 wt% aluminium oxide.

4. The process according to any preceding claim, wherein the material that comprises metallic aluminium is particulate, and wherein 90 wt% of the particles are smaller than 1 mm

5. The process according to any preceding claim, wherein the material that comprises metallic aluminium is alu-dross.

6. The process according to claim 4 or claim 5, wherein from 5 to 30 wt% of the mineral raw material is alu-dross.

7. The process according to claim 1, wherein the material that comprises metallic aluminium comprises from 45 to 100 wt% metallic aluminium.

8. The process according to claim 7, wherein the mineral raw material comprises from 0.05 to 10 wt% of the material that comprises from 45 to 100 wt% metallic aluminium

9. The process according to claim 7, wherein the material that comprises metallic aluminium is aluminium granulate.

10. The process according to claim 9, wherein the aluminium granulate has average granule diameter of no greater than 3 mm.

11. The process according to any preceding claim, wherein the mineral raw material comprises from 0.1 to 0.5 wt% metallic aluminium.

12. The process according to any preceding claim, wherein the MMVF have a content of oxides, as wt.%, as follows:
SiO₂ 35 to 50
Al₂O₃ 12 to 30
TiO₂ up to 2
Fe₂O₃ 3 to 12
CaO 5 to 30
MgO up to 15
Na₂O 0 to 15
K₂O 0 to 15
P₂O₅ up to 3
MnO up to 3
B₂O₃ up to 3.

13. The process according to any of claims 1 to 11, wherein the MMVF have a content of oxides, as wt. %, as follows:
SiO₂ 39-55%
Al₂O₃ 16-27%
CaO 6-20%
MgO 1-5%
Na₂O 0-15%
K₂O 0-15%
R₂O (Na₂O + K₂O) 10-14.7%
P₂O₅ 0-3%
Fe₂O₃ (iron total) 3-15%
B₂O₃ 0-2%
TiO₂ 0-2%.

14. The process of any preceding claim, wherein the MMVF have a ratio of Fe(II):Fe(III) of above 2, such as above 3.

15. The process of any preceding claim, further comprising consolidating the MMVF to form a consolidated product comprising the MMVF.

## Patentansprüche

1. Vorgang zum Herstellen von künstlichen glasartigen Fasern (MMVF), die wenigstens 3 Gew.-% Eisenoxide, bestimmt als Fe₂O₃, umfassen, umfassend:
Bereitstellen eines Elektroofens mit Molybdänelektroden,
Bereitstellen von mineralischem Rohmaterial,
wobei das mineralische Rohmaterial (a) Material, das metallisches Aluminium umfasst, und (b) eine andere mineralische Komponente umfasst,
Einführen des mineralischen Rohmaterials in den Ofen,
Schmelzen des mineralischen Rohmaterials, um eine mineralische Schmelze auszubilden, und
Ausbilden von MMVF aus der mineralischen Schmelze.

2. Vorgang nach einem der vorhergehenden Ansprüche, wobei das Material, das metallisches Aluminium umfasst, 0,5 bis 10 Gew.-% metallisches Aluminium umfasst.

3. Vorgang nach einem der vorhergehenden Ansprüche, wobei das Material, das metallisches Aluminium umfasst, ferner 50 bis 90 Gew.-% Aluminiumoxid umfasst.

4. Vorgang nach einem der vorhergehenden Ansprüche, wobei das Material, das metallisches Aluminium umfasst, teilchenförmig ist und wobei 90 Gew.-% der Teilchen kleiner als 1 mm sind.

5. Vorgang nach einem der vorhergehenden Ansprüche, wobei das Material, das metallisches Aluminium umfasst, Alu-Schlacke ist.

6. Vorgang nach Anspruch 4 oder 5, wobei 5 bis 30 Gew.-% des mineralischen Rohmaterials Alu-Schlacke sind.

7. Vorgang nach Anspruch 1, wobei das Material, das metallisches Aluminium umfasst, 45 bis 100 Gew.-% metallisches Aluminium umfasst.

8. Verfahren nach Anspruch 7, wobei das mineralische Rohmaterial 0,05 bis 10 Gew.-% des Materials umfasst, das 45 bis 100 Gew.-% metallisches Aluminium umfasst.

9. Vorgang nach Anspruch 7, wobei das Material, das metallisches Aluminium umfasst, Aluminiumgranulat ist.

10. Vorgang nach Anspruch 9, wobei das Aluminiumgranulat einen durchschnittlichen Granulatdurchmesser von nicht mehr als 3 mm aufweist.

11. Vorgang nach einem der vorhergehenden Ansprüche, wobei das mineralische Rohmaterial 0,1 bis 0,5 Gew.-% metallisches Aluminium umfasst.

12. Vorgang nach einem der vorhergehenden Ansprüche, wobei die MMVF einen Gehalt an Oxiden in Gew.-% wie folgt aufweisen:
SiO₂ 35 bis 50
Al₂O₃ 12 bis 30
TiO₂ bis zu 2
Fe₂O₃ 3 bis 12
CaO 5 bis 30
MgO bis 15
Na₂O 0 bis 15
K₂O 0 bis 15
P₂O₅ bis zu 3
MnO bis zu 3
B₂O₃ bis zu 3.

13. Vorgang nach einem der Ansprüche 1 bis 11, wobei die MMVF einen Gehalt an Oxiden in Gew.-% wie folgt aufweisen:
SiO₂ 39-55 %
Al₂O₃ 16-27 %
CaO 6-20 %
MgO 1-5 %
Na₂O 0-15 %
K₂O 0-15 %
R₂O (Na₂O + K₂O) 10-14,7 %
P₂O₅ 0-3 %
Fe₂O₃ (Eisen insgesamt) 3-15 %
B₂O₃ 0-2 %
TiO₂ 0-2 %

14. Vorgang nach einem der vorhergehenden Ansprüche, wobei die MMVF ein Verhältnis von Fe(II) : Fe(III) von über 2, wie über 3 aufweisen.

15. Vorgang nach einem der vorhergehenden Ansprüche, ferner umfassend das Konsolidieren der MMVF, um ein konsolidiertes Produkt auszubilden, das die MMVF umfasst.

## Revendications

1. Procédé de fabrication de fibres vitreuses artificielles (FVA) qui comprennent au moins 3 % en poids d'oxydes de fer déterminés comme étant Fe₂O₃, consistant à
fournir un four électrique ayant des électrodes de molybdène,
fournir une matière première minérale,
dans lequel la matière première minérale comprend (a) une matière qui comprend de l'aluminium métallique et (b) un autre composant minéral,
introduire la matière première minérale dans le four,
faire fondre la matière première minérale pour former une masse fondue minérale et
former des FVA à partir de la masse fondue.

2. Procédé selon l'une quelconque des revendications précédentes, dans lequel la matière qui comprend de l'aluminium métallique comprend de 0,5 à 10 % en poids d'aluminium métallique.

3. Procédé selon l'une quelconque des revendications précédentes, dans lequel la matière qui comprend de l'aluminium métallique comprend en outre de 50 à 90 % en poids d'oxyde d'aluminium.

4. Procédé selon l'une quelconque des revendications précédentes, dans lequel la matière qui comprend de l'aluminium métallique est particulaire, et dans lequel 90 % en poids des particules sont inférieurs à 1 mm.

5. Procédé selon l'une quelconque des revendications précédentes, dans lequel la matière qui comprend de l'aluminium métallique est composée de scories d'aluminium.

6. Procédé selon la revendication 4 ou la revendication 5, dans lequel de 5 à 30 % en poids de la matière première minérale sont des scories d'aluminium.

7. Procédé selon la revendication 1, dans lequel la matière qui comprend de l'aluminium métallique comprend de 45 à 100 % en poids d'aluminium métallique.

8. Procédé selon la revendication 7, dans lequel la matière première minérale comprend de 0,05 à 10 % en poids de la matière qui comprend de 45 à 100 % en poids d'aluminium métallique

9. Procédé selon la revendication 7, dans lequel la matière qui comprend de l'aluminium métallique est composée de granulé d'aluminium.

10. Procédé selon la revendication 9, dans lequel le granulé d'aluminium a un diamètre de granulé moyen égal ou inférieur à 3 mm.

11. Procédé selon l'une quelconque des revendications précédentes, dans lequel la matière première minérale comprend de 0,1 à 0,5 % en poids d'aluminium métallique.

12. Procédé selon l'une quelconque des revendications précédentes, dans lequel les FVA ont une teneur en oxydes, en % en poids, comme suit :
| | |
|---|---|
| SiO₂ | de 35 à 50 |
| Al₂O₃ | de 12 à 30 |
| TiO₂ | jusqu'à 2 |
| Fe₂O₃ | de 3 à 12 |
| CaO | de 5 à 30 |
| MgO | jusqu'à 15 |
| Na₂O | de 0 à 15 |
| K₂O | de 0 à 15 |
| P₂O₅ | jusqu'à 3 |
| MnO | jusqu'à 3 |
| B₂O₃ | jusqu'à 3. |

13. Procédé selon l'une quelconque des revendications 1 à 11, dans lequel les FVA ont une teneur en oxydes, en % en poids, comme suit :
| | |
|---|---|
| SiO₂ | 39-55 % |
| Al₂O₃ | 16-27 % |
| CaO | 6-20 % |
| MgO | 1-5 % |
| Na₂O | 0-15 % |
| K₂O | 0-15 % |
| R₂O (Na₂O + K₂O) | 10-14,7 % |
| P₂O₅ | 0-3 % |
| Fe₂O₃ (fer total) | 3-15 % |
| B₂O₃ | 0-2 % |
| TiO₂ | 0-2 %. |

14. Procédé selon l'une quelconque des revendications précédentes, dans lequel les FVA ont un rapport de Fe(II):Fe(III) supérieur à 2, par exemple, supérieur à 3.

15. Procédé selon l'une quelconque des revendications précédentes, consistant en outre à consolider les FVA pour former un produit consolidé comprenant les FVA.
